# FASCICULE DE BREVET EUROPEEN

(11) **EP 0 951 421 B1**
(45) Date de publication et mention de la délivrance du brevet: **04.02.2004**
(21) Numéro de dépôt: 98954552.0
(22) Date de dépôt: 10.11.1998
(51) Int. Cl.: B64C 13/16, B64C 9/12, G05D 1/02

(54) **PROCEDE DE COMMANDE DES GOUVERNES D'UN AVION POUR AGIR CONTRE UNE DEVIATION LATERALE DE TRAJECTOIRE AU SOL**
VERFAHREN ZUR BEDIENUNG DER STEUERFLÄCHEN EINES FLUGZEUGES ZUR KOMPENSATION VON AUSLENKUNGEN DER BAHNKURVE IN QUERRICHTUNG WÄHREND DAS FLUGZEUG SICH AUF DEM BODEN BEFINDET
METHOD FOR CONTROLLING AN AEROPLANE CONTROL SURFACES TO COUNTER GROUND LATERAL DRIFT

(30) Priorité: 12.11.1997 FR 9714160
(43) Date de publication de la demande: 27.10.1999
(73) Titulaire: AIRBUS France, 31060 Toulouse Cedex 03 (FR)
(72) Inventeur: MATHIEU, Gérard, F-31820 Pibrac (FR)
(74) Mandataire: Poulin, Gérard
(86) Numéro de dépôt international: PCT/FR1998/002399
(87) Numéro de publication internationale: WO 1999/024317

(56) Documents cités:
- FR-A- 2 694 738
- US-A- 4 143 839
- PATENT ABSTRACTS OF JAPAN vol. 016, no. 270 (M-1266), 17 juin 1992 & JP 04 066394 A (MITSUBISHI HEAVY IND LTD), 2 mars 1992

## Description

### Domaine technique

La présente invention concerne un procédé de commande des gouvernes d'un avion pour agir contre une déviation latérale de trajectoire au sol.

### Etat de la technique antérieure

Certaines sollicitations peuvent conduire à une déviation latérale de trajectoire d'un avion au sol, par exemple un vent de travers, une panne moteur, une panne inverseur de poussée, ...

Un brevet français n° 2 694 738 décrit ainsi un procédé de commande des gouvernes d'un avion pour compenser, à basse vitesse, une déviation latérale de trajectoire, lors d'une phase de décollage.

Par contre la présente invention concerne une phase d'atterrissage ou une phase de décollage interrompu.

Pendant une phase d'atterrissage, lorsque l'avion est sur la piste, un des objectifs du pilote est de stopper l'avion en le maintenant sur celle-ci. La composante transversale du vent, compte tenu de la stabilité de route de l'avion est une perturbation qui tend à éloigner l'avion de la trajectoire désirée. Pour maîtriser cette trajectoire, le pilote peut intervenir :
- sur les forces aérodynamiques ;
- et/ou sur les forces motrices ;
- et/ou sur les forces de réaction du sol.

### Forces aérodynamiques

La vitesse de l'avion crée une portance aérodynamique. Ainsi à vitesse non nulle, seule une partie de la masse de l'avion est supportée par les trains d'atterrissage.

La traînée de l'avion génère une force qui tend à ralentir l'avion.

Les déporteurs utilisés au sol ou « Ground Spoilers » ont pour objectif de diminuer significativement la portance de la voilure et de « plaquer » l'avion au sol, ce qui augmente l'efficacité du freinage. D'autre part, ils augmentent le coefficient de traînée Cx de l'avion et participent à la décélération.

Le vent de travers génère un couple de lacet proportionnel au dérapage aérodynamique. Ce couple tend à éloigner l'avion de l'axe de la piste. « L'avion veut remonter le vent ». Au fur et à mesure que l'avion décélère, le dérapage aérodynamique augmente. Le vent de travers génère aussi une force latérale.

La gouverne de direction génère un couple de lacet pouvant aider à contrer le couple dû au vent de travers. Elle génère aussi une force latérale.

Le vent de travers génère également un couple de roulis qui conduit à une répartition dissymétrique des charges supportées par les trains d'atterrissage principaux. Il en est de même pour les surfaces de gauchissement ou de roulis (ailerons et « spoilers ») mais aussi pour la gouverne de direction.

Les surfaces de tangage (plan horizontal réglable et gouvernes de profondeur) ont pour effet principal de modifier la charge supportée par la roulette avant de nez.

Un mouvement de lacet génère aussi un couple de lacet qui s'oppose au mouvement.

### Forces motrices

L'utilisation des inverseurs de poussée (ou « reverses ») contribue à la décélération de l'avion. Ils génèrent un couple qui modifie la charge supportée par la roulette avant de nez. D'autre part, ils augmentent la stabilité de route de l'avion et peuvent diminuer l'efficacité des « Ground Spoilers ».

L'utilisation de la poussée des moteurs (en jet direct ou inverse) de façon dissymétrique permet de générer un couple de lacet.

### Forces de réaction du sol

Les trains principaux, le train central et la roulette avant de nez supportent tout ou partie de la masse de l'avion.

La position des atterrisseurs a naturellement un effet stabilisant sur la trajectoire, d'autre part le frottement de roulement tend à ralentir l'avion.

La décélération de l'avion peut être augmentée par une action sur les freins. Le système antidérapage (ou « Antiskid ») permet de bénéficier des capacités maximales d'adhérence du sol en produisant un effort tangentiel directement proportionnel à la charge verticale supportée par chaque train. Plus la charge verticale supportée par ce train est grande et plus les pneus vont être capables de freiner fort.

Si les charges verticales supportées par les trains principaux gauche et droit ne sont pas égales, une action symétrique sur les freins conduit à la création d'une force de freinage mais aussi à un couple de lacet.

La roulette avant dont l'autorité varie en fonction de la vitesse permet de générer un couple de lacet (par l'intermédiaire des pédales ou du volant roulette avant (« Tiller »)). Plus la charge verticale supportée par la roulette avant est forte et plus cette roulette sera efficace.

Ainsi pour maîtriser la trajectoire latérale d'un avion au sol, sont utilisés aujourd'hui :
- la gouverne de direction ;
- la roulette avant de nez ;
- le freinage différentiel ;
- plus rarement une poussée dissymétrique.
   L'invention a pour objet un procédé permettant d'utiliser les gouvernes de gauchissement (ailerons + déporteurs) pour maîtriser cette trajectoire latérale.

### Exposé de l'invention

La présente invention concerne un procédé de commande des gouvernes d'un avion pour agir contre une déviation latérale de trajectoire au sol lors d'un atterrissage ou d'un décollage interrompu, dans lequel on braque la gouverne de direction pour contrer cette déviation et on sort les déporteurs pour plaquer l'avion au sol, caractérisé en ce qu'on réalise une sortie dissymétrique des surfaces de gauchissement, en rentrant au moins un des déporteurs sur l'aile opposée au côté où la gouverne de direction est braquée, et en ce qu'on active la rentrée de ces déporteurs sur un ordre du palonnier.

Avantageusement on active la rentrée de ces déporteurs pour un braquage du palonnier supérieur à 20°.

On peut avantageusement rentrer progres-sivement ces déporteurs : par exemple pour un braquage du palonnier inférieur à 20° aucun de ces déporteurs n'étant rentré, et pour un braquage du palonnier supérieur à 28° tous ces déporteurs étant rentrés.

L'action du palonnier sur les déporteurs peut être fonction de la vitesse de l'avion. Ainsi pour une vitesse de l'avion supérieure à 110 noeuds il peut n'y avoir aucun effet des pédales sur les déporteurs ; pour une vitesse inférieure à 100 noeuds, il peut y avoir effet des pédales sur les déporteurs, entre ces deux vitesses la rentrée des déporteurs étant progressive.

### Brève description des dessins

- Les figures 1 et 2 illustrent respectivement une vue de dessus et une vue arrière d'un avion, dans une phase d'atterrissage ou de décollage interrompu, avec mise en oeuvre du procédé de l'invention ;
- la figure 3 illustre une vue arrière d'un avion, dans une phase d'atterrissage ou de décollage interrompu, par vent latéral, sans mise en oeuvre du procédé de l'invention ;
- les figures 4 et 5 illustrent respectivement une vue de dessus et une vue arrière d'un avion, dans une phase d'atterrissage ou de décollage interrompu, par vent latéral, avec mise en oeuvre du procédé de l'invention ;
- la figure 6 illustre l'efficacité aérodynamique en lacet du palonnier avec ou non mise en oeuvre du procédé de l'invention.

### Exposé détaillé d'un mode de réalisation

L'invention consiste à rentrer tout ou partie des déporteurs ou « Spoilers » sur l'aile opposée au côté où la gouverne de direction est braquée, lors d'un atterrissage (ou lors d'un décollage interrompu) avec « Ground Spoilers » sortis.

L'effet est double :
- le moment aérodynamique en lacet dû à la sortie dissymétrique des déporteurs ou « Spoilers » vient s'ajouter à celui de la gouverne de direction ;
- le moment de roulis créé modifie la charge sur les trains principaux augmentant l'autorité du freinage différentiel.

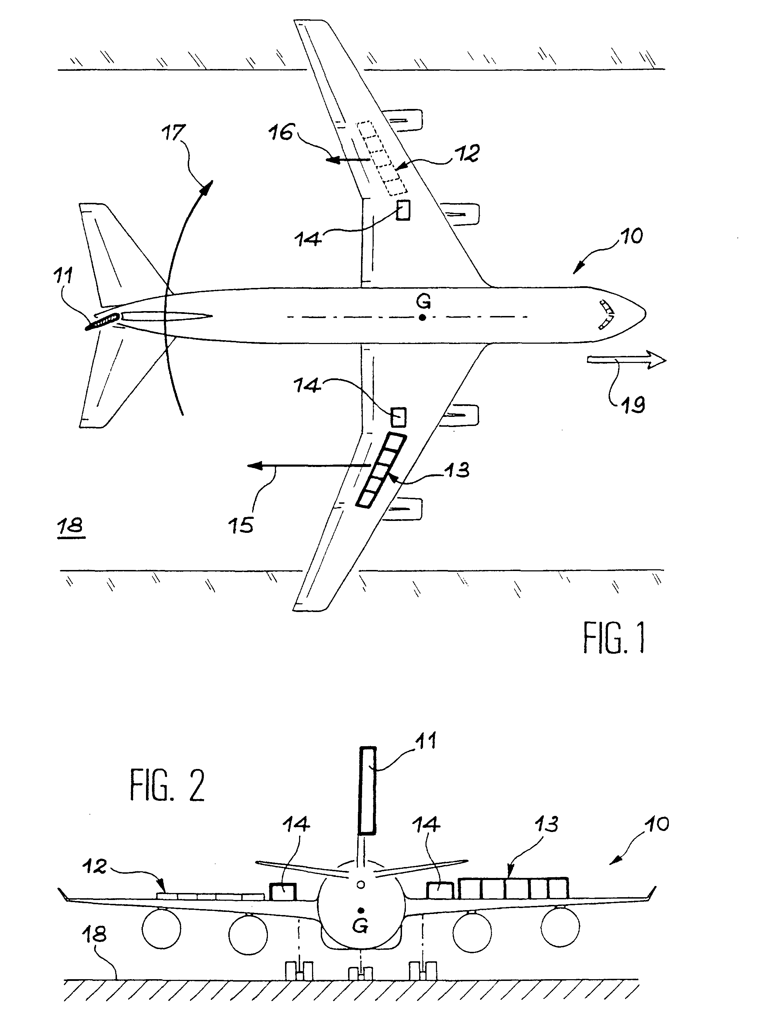

Une surface déployée augmente, en effet, la traînée. Ainsi un braquage dissymétrique de gouvernes, comme illustré sur les figures 1 et 2, induit un couple aérodynamique de lacet qui a un effet positif.

Les figures 1 et 2 illustrent respectivement une vue de dessus et une vue arrière d'un avion 10 lors d'une phase d'atterrissage ou de décollage interrompu. Sur ces figures la gouverne de direction 11 est braquée et les déporteurs 12, sur l'aile opposée au côté où celle-ci est braquée, sont rentrés alors que les déporteurs 13 sur l'autre aile sont sortis. Sur la figure 1 sont représentées la piste d'atterrissage 18 et la vitesse 19 de l'avion. Sur la figure 2 sont également représentés les déporteurs 14 dont la position n'est pas fonction des palonniers, ainsi que le centre de gravité G. La traînée 15 relative à l'aile dont les déporteurs 13 sont sortis est supérieure à celle 16 relative à l'aile dont les déporteurs 12 sont rentrés. La flèche 17 illustre le couple de lacet.

La sortie dissymétrique des surfaces de gauchissement (ailerons + déporteurs) génère un couple de roulis. Ce couple de roulis modifie la répartition des charges verticales sur les trains principaux. Le train principal situé du côté où la gouverne de direction se braque supporte une charge plus grande. Ainsi l'efficacité de freinage de ce train s'en trouve augmentée. Cette dissymétrie de force de freinage génère un couple de lacet de freinage. Cet effet est positif dans la maîtrise de la trajectoire latérale de l'avion.

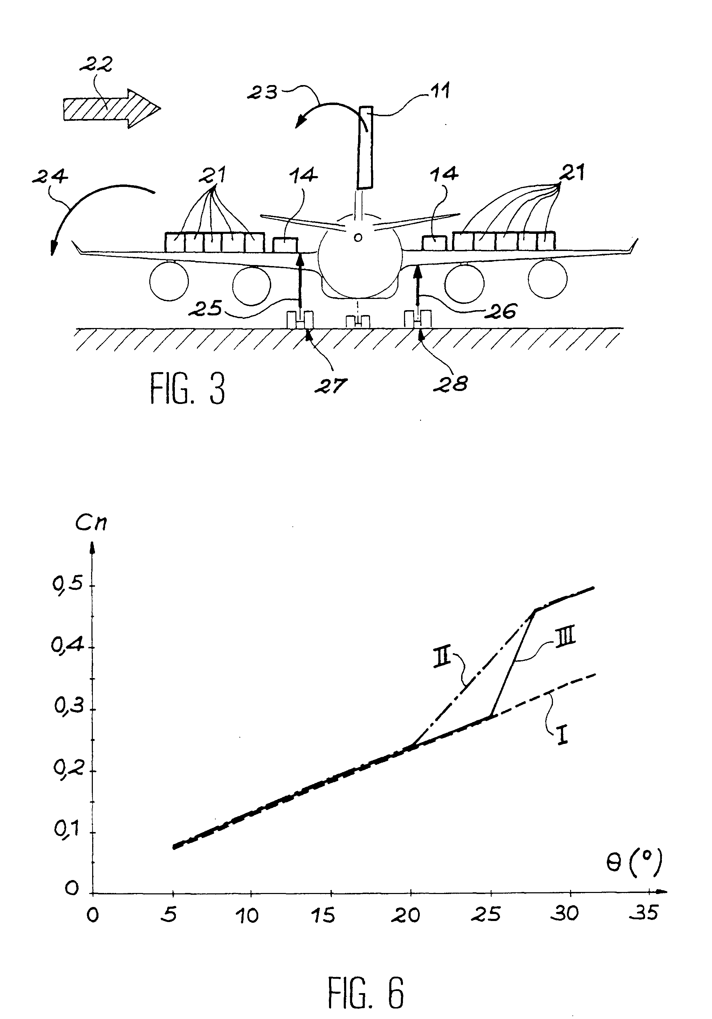

La figure 3 illustre la configuration actuelle des déporteurs 14 et 21, et de la gouverne de direction 11, lors d'un atterrissage par vent de travers 22.

Les flèches 23 et 24 illustrent respectivement le moment de roulis dû à la gouverne de la direction et le moment de roulis généré par la voilure, alors que les flèches 25 et 26 illustrent respectivement la charge supportée par chacun des trains principaux 27 et 28.

Les figures 4 et 5 illustrent respectivement une vue de dessus et une vue arrière d'un avion en phase d'atterrissage ou de décollage interrompu, pour lequel le procédé selon l'invention a été mis en oeuvre. Sur ces figures on a repris les mêmes références que celles employées pour les figures précédentes.

La flèche 30 illustre le couple de roulis créé par la sortie dissymétrique des surfaces de gauchissement. Les flèches 31 et 32 illustrent la nouvelle répartition des charges verticales sur les trains principaux 27 et 28.

Dans un mode de réalisation avantageux du procédé de l'invention, la rentrée des déporteurs est activée sur un ordre du palonnier (rentrée totale ou partielle de tout ou partie des déporteurs). Par exemple avec un braquage du palonnier maximum de 30° :
- pour un braquage du palonnier inférieur à 20°, il n'y a pas d'effet sur les déporteurs ;
- pour un braquage du palonnier supérieur à 28°, la rentrée des déporteurs est réalisée en cotalité ;
- entre ces deux braquages de palonnier, la rentrée des déporteurs est progressive.

Les ailerons ne sont, dans ce cas, pas concernés ; ainsi il subsiste une autorité en roulis au manche.

L'activation peut être fonction de la vitesse de l'avion, par exemple :
- au-dessus de 110 noeuds, il n'y a pas d'effet des pédales sur les déporteurs ;
- en dessous de 100 noeuds, la modification est active ;
- entre ces deux vitesses, l'application est progressive.

L'invention consiste ainsi à rentrer partiellement les déporteurs sur l'aile opposée au côté où la gouverne de direction est braquée (aile au vent), lors d'un atterrissage ou d'un décollage interrompu avec « Ground Spoilers » sortis et à basse vitesse. L'effet est double :
- le couple aérodynamique en lacet dû à la sortie dissymétrique des déporteurs vient s'ajouter à celui de la gouverne de direction ;
- le couple de roulis créé modifie la charge sur les trains principaux, augmentant l'autorité du freinage différentiel.

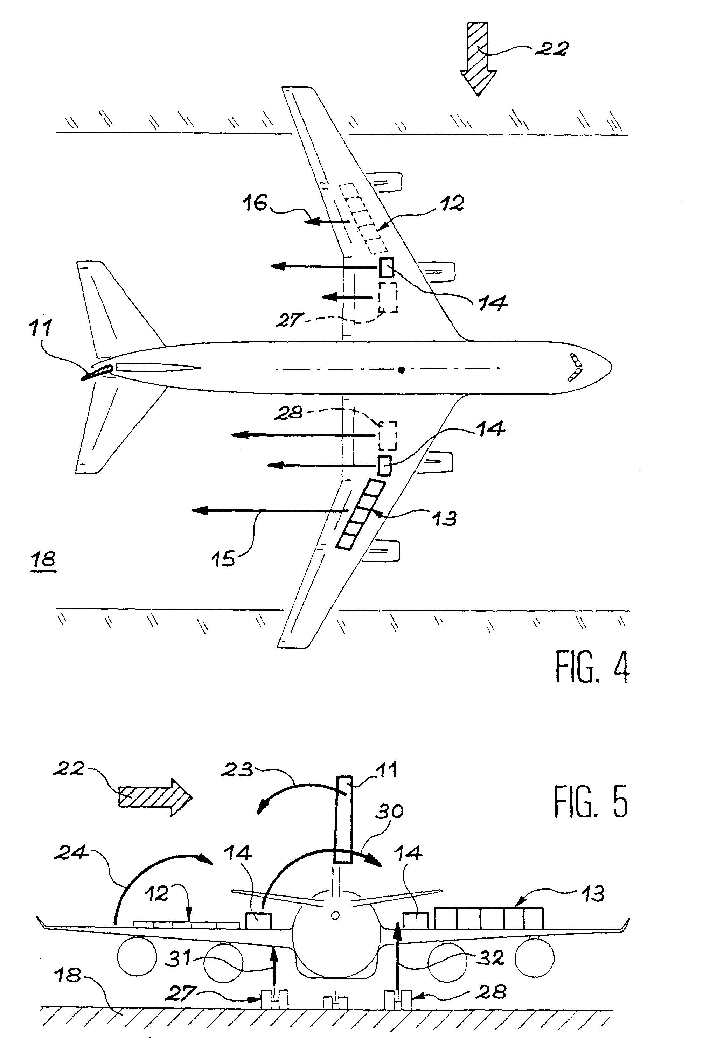

La figure 6 illustre l'efficacité aérodynamique en lacet du palonnier, pour une vitesse de l'avion de 80 noeuds. On a ainsi trois courbes du couple en lacet Cn en fonction de l'angle θ du palonnier, respectivement :
- une courbe I pour la configuration actuelle illustrée sur la figure 3 ;
- des courbes II et III avec mise en oeuvre du procédé de l'invention comme illustré sur les figures 4 et 5, avec un début de rentrée des déporteurs respectivement à 20° et à 25°.

## Revendications

1. Procédé de commande des gouvernes d'un avion pour agir contre une déviation latérale de trajectoire au sol lors d'un atterrissage ou d'un décollage interrompu dans lequel on braque la gouverne de direction (11) pour contrer cette déviation et on sort les déporteurs pour plaquer l'avion au sol, **caractérisé en ce qu'**on réalise une sortie dissymétrique des surfaces de gauchissement (12, 13), **en ce qu'**on rentre au moins un des déporteurs (12) sur l'aile opposée au côté où la gouverne de direction (11) est braquée, et **en ce qu'**on active la rentrée de ces déporteurs sur un ordre du palonnier.

2. Procédé selon la revendication 1, **caractérisé en ce qu'**on active la rentrée de ces déporteurs pour un braquage du palonnier supérieur à 20°.

3. Procédé selon la revendication 1, **caractérisé en ce qu'**on rentre progressivement ces déporteurs.

4. Procédé selon la revendication 3, **caractérisé en ce que** pour un braquage du palonnier inférieur à 20° aucun de ces déporteurs n'est rentré, et **en ce que** pour un braquage du palonnier supérieur à 28° tous ces déporteurs sont rentrés.

5. Procédé selon la revendication 1, **caractérisé en ce que** l'activation des déporteurs est fonction de la vitesse de l'avion.

6. Procédé selon la revendication 5, **caractérisé en ce que** pour une vitesse de l'avion supérieure à 110 noeuds il n'y a pas d'effet des pédales sur les déporteurs ; pour une vitesse inférieure à 100 noeuds, il y a effet des pédales sur les déporteurs, la rentrée des déporteurs étant progressive entre ces deux vitesses.

## Patentansprüche

1. Verfahren zur Steuerung der Steuerflächen bzw. Ruder eines Flugzeugs, um gegen eine seitliche Bahnabweichung am Boden während eines unterbrochenen Landevorgangs oder Startvorgangs einzuwirken, bei dem das Seitenruder (11) eingeschlagen wird, um dieser Abweichung entgegenzuwirken, und bei der die Auftriebsdämpfer bzw. Störklappen ausgefahren werden, um das Flugzeug auf den Boden zu drücken, **dadurch gekennzeichnet, dass** ein asymmetrisches Ausfahren der Schrägstellflächen (12,13) durchgeführt wird und dass mindestens eine(r) der Auftriebsdämpfer bzw Störklappen (12) an dem Flügel eingezogen_wird, der derjenigen Seite, an der das Seitenruder (11) eingeschlagen wird, gegenüberliegt, und dass das Einziehen der Auftriebsdämpfer bzw. Störklappen auf einen Befehl des Richtungshebels bzw. Steuerknüppels hin aktiviert wird.

2. Verfahren nach Anspruch 1, **dadurch gekennzeichnet, dass** das Einfahren dieser Auftriebsdämpfer bzw. Störklappen bei einem Einschlagen des Richtungshebels über 20° aktiviert wird.

3. Verfahren nach Anspruch 1, **dadurch gekennzeichnet, dass** die Auftriebsdämpfer bzw. Störklappen progressiv eingefahren werden.

4. Verfahren nach Anspruch 3, **dadurch gekennzeichnet, dass** bei einem Einschlagen des Richtungshebels bzw. Steuerknüppels unter 20° keiner dieser Auftriebsdämpfer eingefahren wird, und dass bei einem Einschlagen des Richtungshebels über 28° alle Auftriebsdämpfer eingefahren werden.

5. Verfahren nach Anspruch 1, **dadurch gekennzeichnet, dass** die Aktivierung der Auftriebsdämpfer bzw. Störklappen eine Funktion der Geschwindigkeit des Flugzeugs ist.

6. Verfahren nach Anspruch 5, **dadurch gekennzeichnet, dass** für eine Geschwindigkeit des Flugzeugs über 110 Knoten keine Pedalwirkung auf die Auftriebsdämpfer bzw. Störklappen erfolgt, und für eine Geschwindigkeit unter 100 Knoten eine Pedalwirkung auf die Auftriebsdämpfer bzw. Störklappen erfolgt, wobei das Einfahren der Auftriebsdämpfer bzw. Störklappen progressiv zwischen diesen beiden Geschwindigkeiten stattfindet.

## Claims

1. Process for controlling the control surfaces of an aircraft to resist lateral deviation of the trajectory on the ground when landing or during an interrupted take-off, in which the rudder (11) is turned to resist this deviation, and spoilers are extended to increase the pressure of the aircraft on the ground, **characterized in that** the ailerons (12, 13) are extended asymmetrically, and **in that** at least one of the spoilers (12) is retracted, on the wing opposite the side towards which the rudder (11) is turned and **in that** retraction of these spoilers is activated by an order from the rudder pedal.

2. Process according to claim 1, **characterized in that** these spoilers are retracted when the rudder pedal is turned by more than 20°.

3. Process according to claim 1, **characterized in that** these spoilers are retracted gradually.

4. Process according to claim 3, **characterized in that** none of these spoilers is retracted if the rudder pedal is turned by less than 20°, and that all these spoilers are retracted if the rudder pedal is turned by more than 28°.

5. Process according to claim 1, **characterized in that** activation of the spoilers depends on the aircraft speed.

6. Process according to claim 5, **characterized in that** the pedals have no effect on the spoilers for an aircraft speed exceeding 110 knots; the pedals are effective on the spoilers for a speed less than 100 knots, the spoilers retracting progressively between these two speeds.
